# EUROPEAN PATENT APPLICATION

(11) **EP 2 993 597 A1**
(43) Date of publication of application: **09.03.2016**
(21) Application number: 15184022.0
(22) Date of filing: 07.09.2015
(51) Int. Cl.: G06F 17/30, H04N 21/262

(54) **SYSTEM, METHOD AND SOFTWARE PRODUCT FOR SORTING AUDIO DATA AND PLAYLIST CLONING**

(30) Priority: 05.09.2014 US 201462046222 P
(71) Applicant: Next Audio Labs, LLC, Alliso Viejo, CA 92656 (US)
(72) Inventor: MALENFANT, Didier, Aliso Viejo, CA 92656 (US)
(74) Representative: Smith, Jeremy Robert

(57) **Abstract**

A system, method and non-transitory computer readable medium (comprising a computer program or software product) provides true "sorting" of audio data functionality and further provides "cloning" of such a playlist, crate or folder, all of which contain such audio data.

## Description

This Application claims the benefit of U.S. Provisional Application No. 62/046,222, filed September 5, 2014.

### FIELD OF THE INVENTION

This invention relates generally to computer applications, or "apps," including those that are web-based systems and methods for acquiring, storing, processing, retrieving and displaying information and data by means of the internet, via a website (or "site"). It also relates to such apps that are directed to audio data generally and to music and media content specifically, which can be used both online or offline. More specifically, the present invention relates to a system, method and software product that provides a user with the ability to automatically sort the content of audio data which can include sound samples or music media "playlists" (also known as "crates" or "folders," all of which is collectively referred to herein as "audio data") based on multiple criteria and to maintain the sorting in real-time as the content evolves. It also relates to a method to create one or multiple "duplicates" or "clones" of such audio data.

### BACKGROUND OF THE INVENTION

The internet has given computer users the enhanced ability to listen to and to watch various different forms of media data via computers and personal computing devices. As referenced herein, the phrase "media data" includes any and all types of data that can be processed into media, including, but not limited to, musical data (e.g., songs), other audio data, video data, animated data, other moving image data, and/or still image data and can be in the form of sound samples, audio music, music videos, television programs or any other form of audio or video data that a user wishes to watch or listen to. Web systems have been developed that allow a user to log on to a network and, using a media player, either listen to specific media chosen from a group of media that a particular service has to offer or to listen to an array of media offerings such as a radio station wherein different songs or other forms of media are combined to allow a user to listen to a group of songs in sequence, whether chosen by the user or by the operators of the network service. Further, many media players, services and other software tools enable media to be organized by a user or a service into playlists, which, as the name connotes, are groups or lists of media files or file identifiers that can be used to effect playback by a user in a sequence or other selected or random order.

For example, iTunes® (iTunes is a registered mark of Apple Inc.) is a commonly-known software for use in authoring, downloading, transmitting, receiving, editing, extracting, encoding, decoding, playing, storing and organizing audio data - typically songs. When users of such software talk about "sorting" the acquired audio data or songs, what they are really talking about is *"ordering"* that data. That is, "sorting," by definition, is the act of splitting something into two different sections or buckets, if you will. Accordingly, if the user is simply putting things in an "order," that is exactly what he or she is doing - *ordering.* This is not "sorting" in the strict sense of that term.

Further, users of such software may reference "smart playlists" or "smart crates." What is really happening under this functionality is that the "playlist" or "crate" in that media, such as songs, will be arranged in a certain way - such as by listing all songs that begin with the letter "T." This is all very static and is known in the art.

What is needed, is a way to truly "sort" such playlists, crates or folders (or simply "audio data" or "media data") based on multiple criteria and to maintain this sorting in real-time as the content evolves. What is also needed is a method to create one or multiple "duplicates" or "clones" of a musical playlist, crate or folder so that, for example, their content can be sorted by different criteria as well.

### SUMMARY OF THE INVENTION

In accordance with the foregoing, this inventor has devised a method, system and a non-transitory computer readable medium (comprising a computer program or software product) that provides true "sorting" of audio data. As referenced above, and as used in the detailed description below, the term "smart crates" will be used for crates that are created in accordance with, and are based on, user-defined rules. The term "filtered crates" will be used for crates that are created in accordance with, and are based on, user-defined filtering functionality in accordance with the present invention, whereas the term "sorting crates" will be used for crates that are created from "sorted crates" in accordance with, and are based on, preprogrammed sorting criteria in accordance with the present invention. It is to be understood that "sorted crates" are the "parent crates" that contain all of the data to be sorted. When sorted in accordance with the present invention, this creates "sorting crates," which can be considered the "children crates." It is also to be understood that "filtered crates" are not the same as "smart crates." That is, "smart crates" are existing concepts which are known in the art and their content is created based on existing rules, this being true for all such crates in a collection. Filters work on only one crate (its parent) and automatically create or maintain a "sub-crate" for media data that does not fit any of the filters added to the parent. To further clarify the concept of the present invention, it is to be understood that "crates" or "smart crates" can be sorted, thereby creating "sorted crates," as that term is recited above.

Lastly, the method, system and non-transitory computer readable medium of the present invention also provides "cloning" of such a playlist, crate or folder, all of which contain such audio data.

The foregoing and other features of the method, system and software product of the present invention will become apparent from the detailed description that follows.

### BRIEF DESCRIPTION OF THE DRAWING

FIG. 1 is a representative screen shot showing a display that is in accordance with the present invention.
FIG. 2 is a representative screen shot showing a display that is in accordance with the present invention.
FIG. 3 is a representative screen shot showing a display that is in accordance with the present invention.
FIG. 4 is a representative screen shot showing a display that is in accordance with the present invention.
FIG. 5 is a representative screen shot showing a display that is in accordance with the present invention.
FIGS. 6 and 6A are representative screen shots showing displays that are in accordance with the present invention.
FIG. 7 is a representative screen shot showing a display that is in accordance with the present invention.
FIG. 8 is a representative screen shot showing a display that is in accordance with the present invention.
FIG. 9 is a representative screen shot showing a display that is in accordance with the present invention.

### DETAILED DESCRIPTION

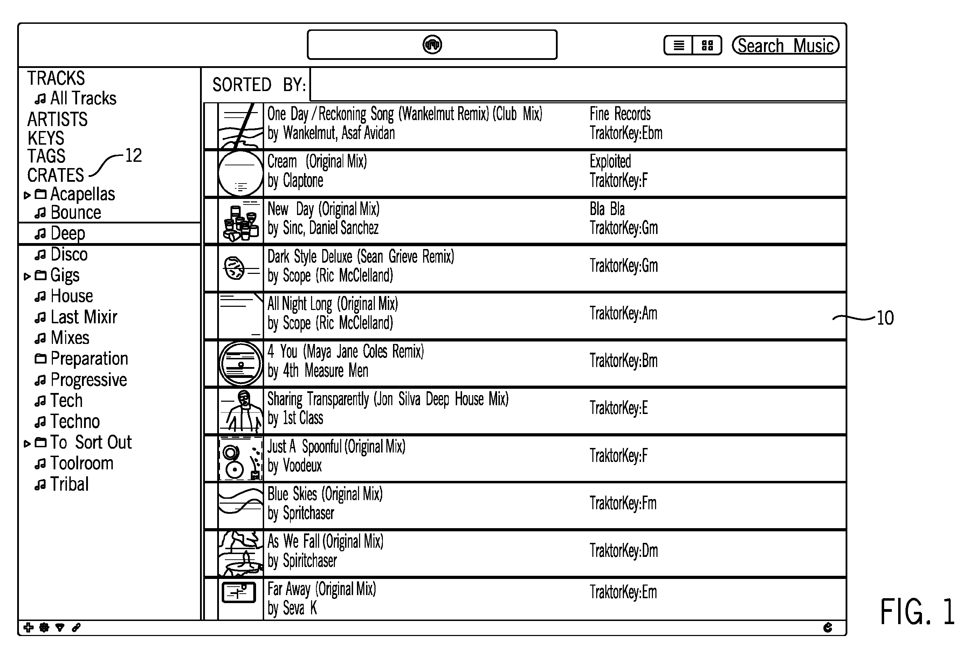

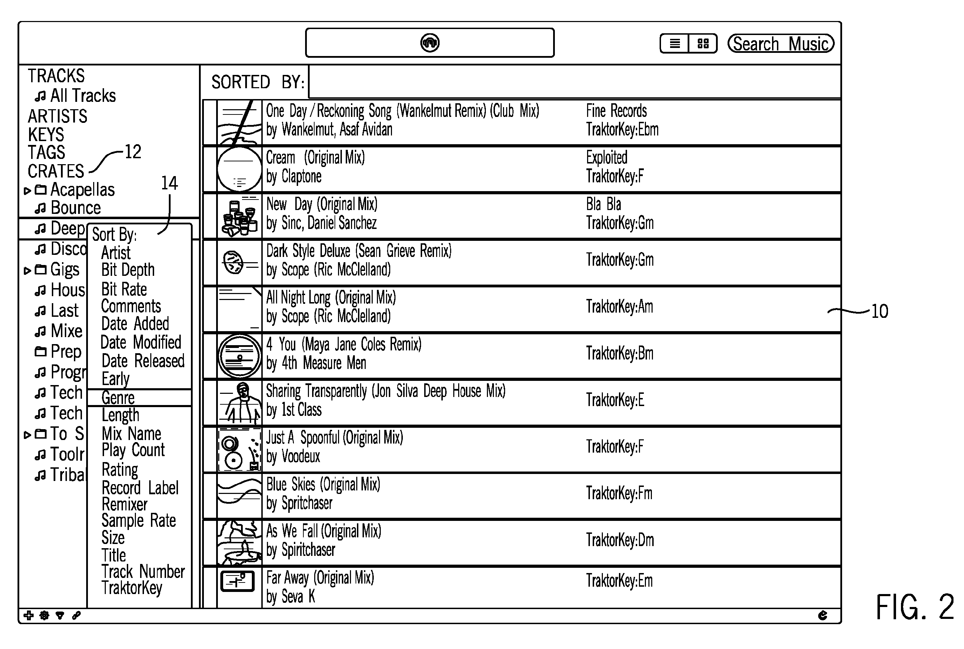

In a first aspect of the present invention, a musical software application (or simply an "app") in accordance with the present invention, offline or online, comprises a method to automatically sort the audio data content of a playlist, crate or folder, which are collectively referred to herein as "crates" or "a crate" throughout. See the screen display, generally identified 10, in FIG. 1. As shown in FIG. 2, the content of the crates 12 is based on multiple criteria 14 and maintains true "sorting" in real-time as the content evolves. The sorting process can either create "sorting crates" based on sorting criteria 14 or "filtered crates" based on user-defined filters. As used in this application, however, it is to be understood that the term "sorting crate" means crates that are automatically generated from "sorted crates" by applying the sorting criteria defined in this application. Criteria 14 can be any property or tag belonging to, or associated with, the musical track or sound sample (which, for simplicity, are collectively referred to as a "track" herein, but all of which is essentially "audio data" - the term "track" being synonymous with "audio data" for purposes of the description of the present invention), such as date of release, musical key, or other criteria 14 shown, by example, in FIG. 2. However, the word "track" as used in this application is to be understood to include media data, or simply "media."

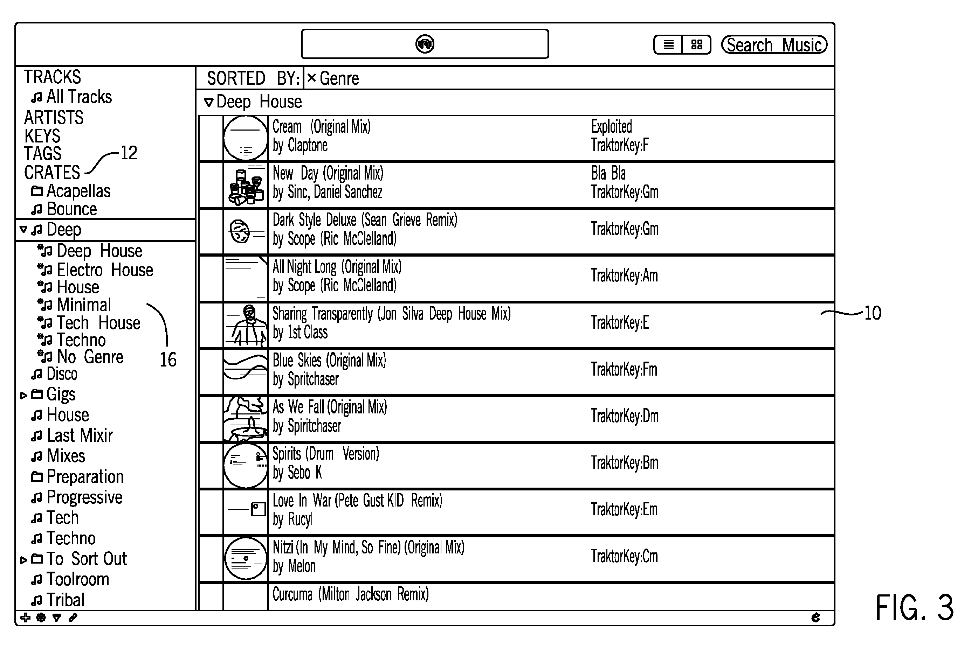

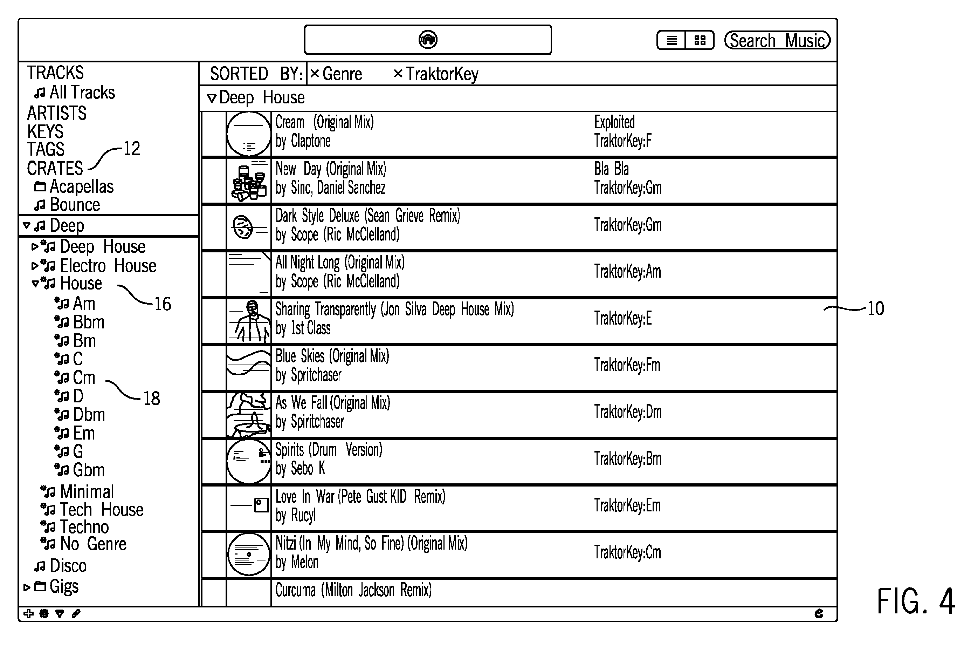

As shown in that FIG. 2, the user selects a criteria 14 to sort the sorted crate 12. The process then automatically creates sorting crates 16 as "children" of the sorted crate 12 for all the different values of all the track contained in the crate 12. See FIG. 3. Each crate is given the name of the value that it represents for the sorting criteria. It is also to be understood that tracks that do not contain the sorting criteria, if any, are themselves sorted in a separate sorting crate named 'Not <Sorting Criteria>' or 'No <sorting criteria>' where <Sorting Criteria> is replaced by the name of the sorting criteria. It is also to be understood that, if the crate being sorted is modified in any way, for example, by adding or removing a track from it, the sorting crate created by the sorting process is automatically updated and new sorting crates are created or existing ones are deleted automatically based on the new content. More than one sorting criteria can be added to a given crate or smart crate. As more sorting criteria are added, more levels of sorting crates 18 underneath the first ones are created. See FIG. 4.

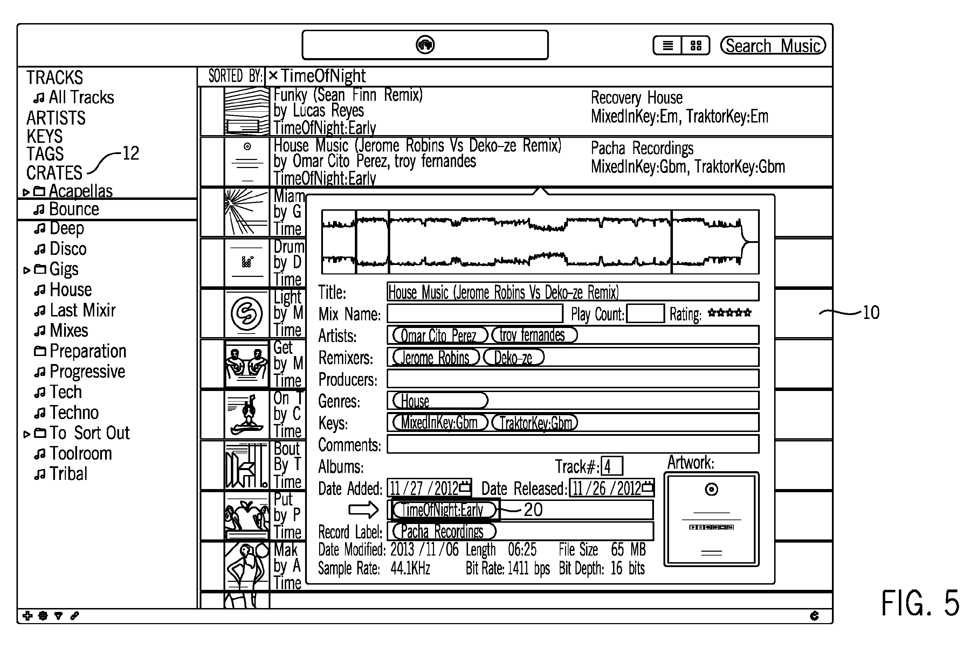

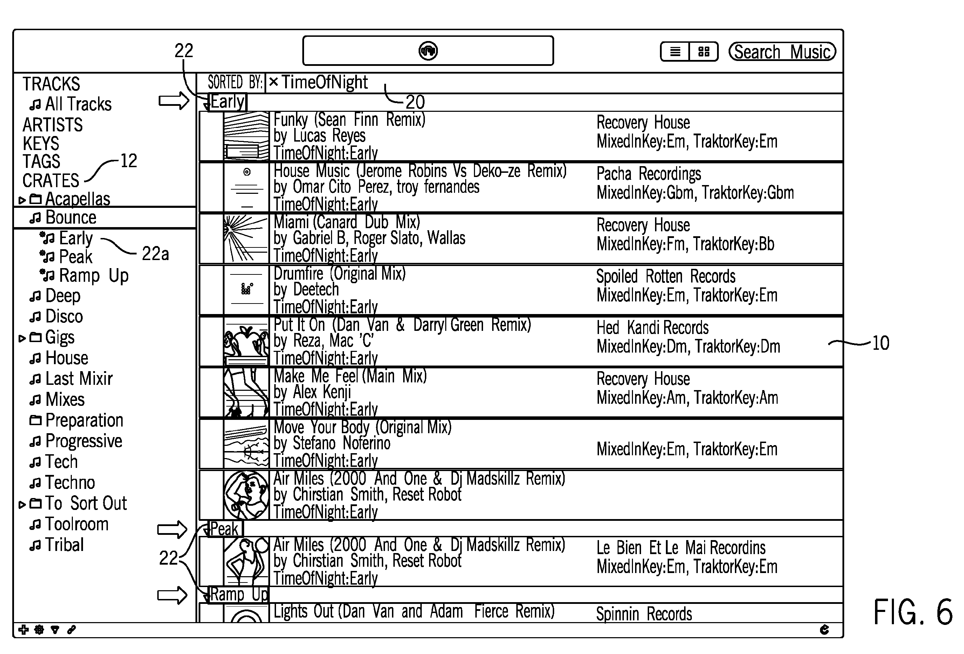

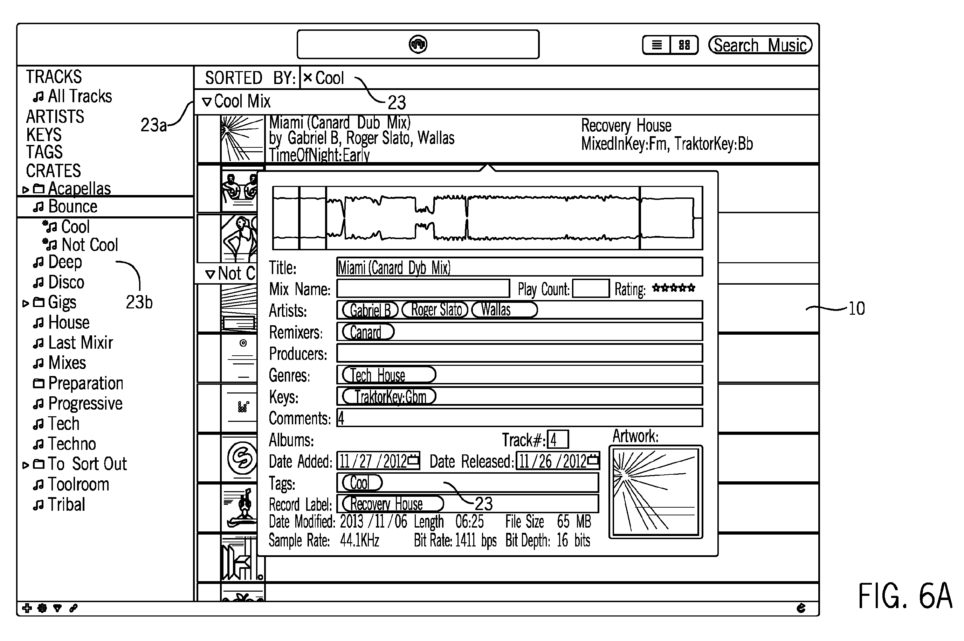

When sorting a crate 12 based on track tags 20, if those tags 20 have both a name and a value, such as that shown in FIG. 5, then sorting the content by this tag 20 name will sort by the different values of that tag 20. See FIG. 6 which shows a number of tag values 22a. Referring to FIG. 6A, it will be seen that, if the tag 23 only has a name, then sorting by this tag will only create two "child" sorting crates 23b - one for the tracks that contain the tag and one for the tracks that do not. When displaying the content of a sorting crate, or if there is more than one sorting criteria for any child sorting crate, the main view also displays headers 22, 23a for each separate value of the given sorting criteria and sorts the tracks underneath these headers according to the value they have for that sorting criteria.

Users can also drag and drop tracks onto one of the sorted crates to easily perform two things. First, the track is added to the sorted crate which created this sorting crate, if it wasn't already there. Second, the track gets the value of the sorting criteria represented by the sorting crate assigned to it, if it didn't already have it. This is an easy way for users to assign properties or tags to tracks.

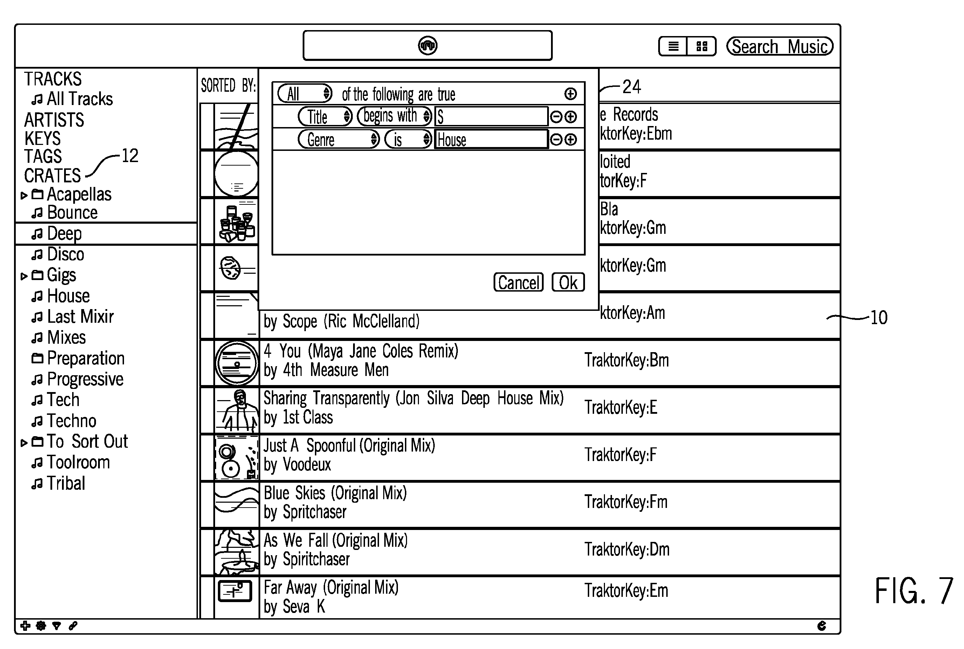

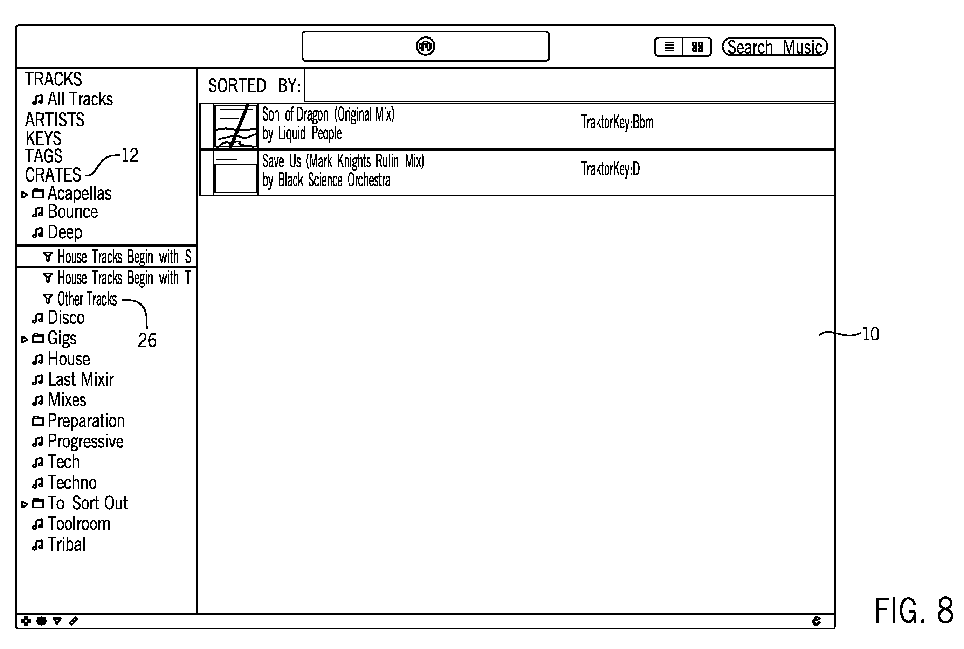

Alternatively, the user can add one or multiple filters to a given crate or smart crate. Filters are shown as a smart crate which contains all the tracks found in the parent crate but are filtered by one or multiple rules 24. See FIG. 7. Any track that is found in the parent crate but does not appear in any of the sorting crates created by the filters, if any, are grouped into an extra sorted crate named "Other Tracks" or "Other Samples." See FIG. 8. Further, users can save a given set of sorting criteria or filters, give them a name and apply the same set them on other crates or share them with other users via a file or an online service.

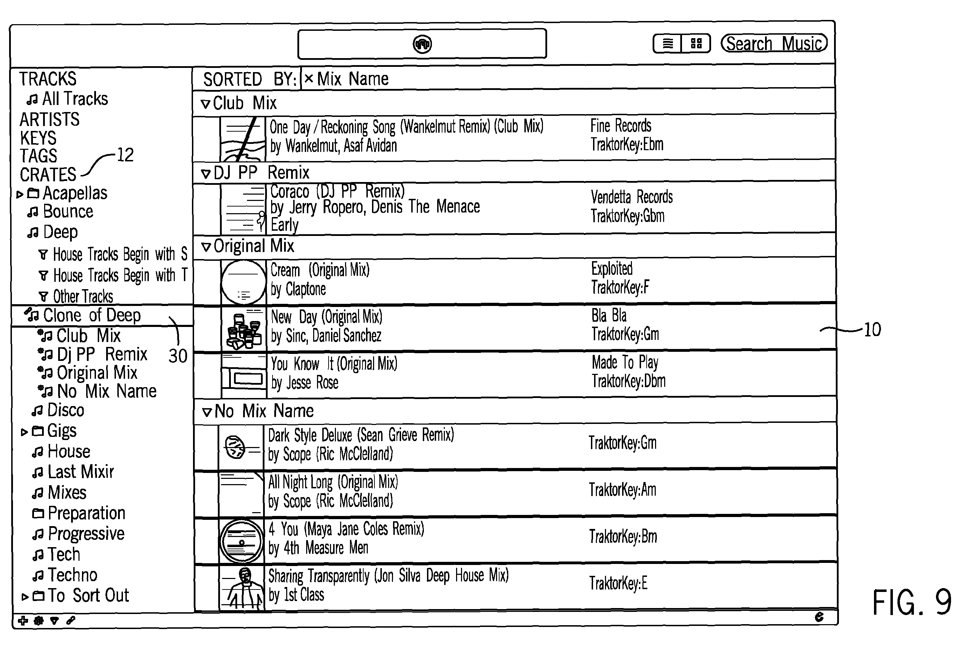

In a second aspect of the present invention, a musical app, offline or online, comprises a method to create one of multiple duplicates or clones 30 (collectively referred to herein as "clones") of a musical crate 12. See FIG. 9. It is to be understood that clones 30 contain the same content, tracks and crates as the original and act as a "proxy" to the original. That is, they can be moved anywhere in the playlist tree, and any track or crate added to them also gets added to the original, and vice-versa. Clones 30 and originals can be sorted by different sorting criteria allowing the user to view the content in different ways.

For purposes of enablement, it is to be understood that any computing device that enables the user to access the internet is within the scope of the present invention, whether that device is later used online or offline. The computing device in accordance with any embodiment of the present invention can include a hard-wired Internet communication means, a wireless Internet communication means, an audio/video input unit, a user input unit, a sensing unit, an output unit, a memory, an interface unit, a controller (which is a processing unit), a power supply unit and the like. It is also to be understood that implementing all of the components is not a requirement, as greater or fewer components may be implemented.

The hard-wired communication means can include a conventional telephone line, a bundle of optic fibers, or other like technology known in the communication arts. The wireless communication means typically includes one or more components which permits wireless communication between the computing device and a wireless communication system or network within which the computing device is located. The wireless Internet means can include Wireless LAN, Wi-Fi, Wibro, Wimax, HSDPA, etc. The controller, which is a processing unit, is used to control the overall operations of the computing device. The user input unit generates input data responsive to user manipulation of an associated input device or devices. Examples of such devices typically include a keypad, a dome switch, a touchpad (e.g., static pressure/capacitance), a jog wheel, a jog switch, etc.

The memory unit is generally used to store various types of data to support the processing, control, and storage requirements of the computing device. Examples of such data include program instructions for applications operating on the computing device, contact data, messages, audio, still pictures, moving pictures, etc. The memory may be implemented using any type or combination of suitable volatile and non-volatile memory or storage devices of the type known in the art. The computing device may operate in association with a web storage for performing a storage function of the memory on the internet.

The interface unit is implemented to couple the computing device with external devices, such as the campaign beacons. The interface unit receives data from the external devices or is supplied with the power and then transfers the data or power to the respective elements of the computing device or enables data within the computing device to be transferred to the external devices.

The output unit typically generates outputs that are relevant to the senses of sight, hearing, touch and the like. Further, the output unit includes a display which is typically implemented to visually display (output) information associated with the computing device. In the present invention, the output unit is particularly configured to output visual information to the user by means of a display module. The display module may be implemented using known display technologies including, for example, a liquid crystal display (LCD), a thin film transistor-liquid crystal display (TFT-LCD), an organic light-emitting diode display (OLED), a flexible display and a three-dimensional display. Some of the above displays can be implemented in a transparent or optically-transmissive type, which can be named a transparent display. Where the display and a sensor for detecting a touch action (or "touch sensor") configures a mutual layer structure (or "touchscreen"), it is able to use the display as an input device as well as an output device. In this case, the touch sensor can be configured as a touch film, a touch sheet, a touchpad or the like.

It should also be understood that various embodiments described herein may be implemented in a computer-readable medium using, for example, computer software, hardware, or some combination thereof. For a hardware implementation, the embodiments described herein may be implemented using electronic units that are known in the art and designed to perform the functions described herein, or a selective combination thereof. Such embodiments may also be implemented by the controller.

For software implementation, the embodiments described herein may be implemented with separate software modules, such as procedures and functions, each of which perform one or more of the functions and operations described herein. The software codes can be implemented with a software app written in any suitable programming language and may be stored in memory such as the memory, and executed by a controller or processor, such as the controller. That is, the software includes source code which is a list of instructions, written in a selected computer language, and then converted into computer machine language, which language the computer uses to build the software "machine" described by the instructions. The software machine is made up of the components referred to above. The source code is a detailed "blueprint" telling the computer how to assemble those components into the software machine. Further, the source code is organized into separate files, files are organized into separate modules, and modules are organized into separate functions or routines to accomplish, via pre-programmed algorithms, the necessary steps in accordance with the method and system of the present invention. It is to be understood that the specific way that the source code is organized into files, modules and functions is a matter of programmer design choice and is not a limitation of the present invention.

Lastly, the power supply unit provides power required by the various components for the computing device. Power is provided internally or externally, or by a combination thereof.

## Claims

1. A computer implemented system for providing a user, such user having an interactive digital device, with an audio data application for sorting audio data, the system comprising:
a user interface on the digital device which provides visual information to the user on the interface via a screen display and which allows the user to visually interact with the visual information, including existing sorted crates;
system software for allowing the sorted crates to be sorted in accordance with the pre-programmed sorting criteria; and
system software for allowing the user to create sorting crates based on pre-programmed sorting criteria.

2. The computer implemented system of claim 1 further comprising system software such that one or more crates or smart crates can be sorted based on track tags, such track tags having a name and a value.

3. The computer implemented system of claim 1 further comprising system software such that the user can use drag and drop functionality to add a track to a sorted crate such that the value of the sorting criteria represented by the sorting crate is assigned to the track.

4. The computer implemented system of claim 1 further comprising system software for allowing the user to create filtered crates based on user-defined filters and to add one or multiple filters to a given crate or smart crate.

5. The computer implemented system of claim 1 further comprising system software wherein the user can use the system software to clone crates or smart crates.

6. A computer implemented method for sorting audio data comprising the steps of:
electronically providing a user interface on a digital device which provides visual information to the user on the interface via a screen display and which allows the user to visually interact with the visual information, including existing sorted crates;
electronically allowing the user to create:
sorted crates based on sorting criteria, and/or
smart crates based on user-defined filters; and
electronically allowing the sorted crates to be sorted in accordance with the sorting criteria to create sorting crates.

7. The computer implemented method of claim 6 further comprising the step of sorting the sorted crates based on track tags, such track tags having a name and a value.

8. The computer implemented method of claim 6 wherein the user can use drag and drop functionality to add a track to a sorting crate such that the value of the sorting criteria is assigned to the track.

9. The computer implemented method of claim 6 wherein the user can use the system to clone crates.

10. A computer program product for allowing a user to sort audio data on a digital device which provides an interface for the user, the computer program product being embodied in a transitory computer readable medium comprising computer instructions for:
electronically providing visual information to the user on the interface via a screen display;
electronically allowing the user to visually interact with the visual information, including existing sorted crates;
electronically allowing the user to create:
sorting crates based on pre-programmed sorting criteria, and/or
smart crates based on user-defined filters; and
electronically allowing the sorted crates to be automatically updated in accordance with a pre-programmed scheme.

11. The computer program product of claim 10 wherein the sorting crates can be sorted based on track tags, such track tags having a name and a value.

12. The computer program product of claim 10 wherein the user can use drag and drop functionality to add a track to a sorting crate such that the value of the sorting criteria is assigned to the track.

13. The computer program product of claim 10 wherein the user can use the computer program product to clone crates or smart crates.
